# DEMANDE DE BREVET EUROPEEN

(11) **EP 4 650 885 A1**
(43) Date de publication de la demande: **19.11.2025**
(21) Numéro de dépôt: 24175900.0
(22) Date de dépôt: 15.05.2024
(51) Int. Cl.: G04C 3/14, H02P 8/02

(54) **DISPOSITIF DE COMMANDE D'UN MOTEUR PAS-À-PAS POUR MOUVEMENT HORLOGER ÉLECTRONIQUE**

(71) Demandeur: Richemont International S.A., 1752 Villars-sur-Glâne (CH)
(72) Inventeur: RAGOT, Patrick, 2052 Fontainemelon (CH); TAGHEZOUT, Daho, 1110 Morges (CH); JEANNOT-TIROLE, Vincent, 25570 Grand'Combe-Châteleu (FR); FIACCABRINO, Jean-Charles, 1421 Grandevent (CH)
(74) Mandataire: Micheli & Cie SA

(57) **Abrégé**

Dispositif de commande (100) pour un moteur électrique pas-à-pas (9) pour mouvement horloger électronique, le moteur (9) comprenant une première bobine (1), une deuxième bobine (2), un stator (4) en un matériau magnétique doux et un rotor (5) comprenant un aimant permanent, le dispositif de commande (100) étant configuré pour générer un premier jeu d'impulsions motrices (IM1) pour énergiser la première bobine (1) et pour générer un deuxième jeu d'impulsions motrices (IM2) pour énergiser la deuxième bobine (2), la première bobine (1) et la deuxième bobine (2) étant énergisées simultanément, caractérisé en ce que dans un premier mode de fonctionnement le dispositif de commande (1) génère le premier jeu d'impulsions motrices (IM1) en contre-phase avec le deuxième jeu d'impulsions motrices (IM2) pour tourner le rotor (5) dans un premier sens et avec un premier couple, et en ce que dans un deuxième mode de fonctionnement le dispositif de commande (1) génère le premier jeu d'impulsions motrices (IM1) en phase avec le deuxième jeu d'impulsions motrices (IM2) pour tourner le rotor (5) dans un deuxième sens opposé au premier sens et avec un deuxième couple, le premier couple étant plus grand que le deuxième couple.

## Description

La présente invention concerne un dispositif de commande de moteur électrique pas-à-pas pour mouvement horloger électronique. La présente invention concerne en particulier un dispositif de commande pour un moteur pas-à-pas comprenant une première phase et une deuxième phase et dont le rotor peut être piloté dans les deux sens de rotation, ainsi qu'un ensemble comprenant un tel dispositif de commande et un tel moteur pas-à-pas.

Dans les pièces d'horlogerie électroniques à affichage analogique, il est d'usage courant de trouver un moteur pas-à-pas pour convertir les impulsions électriques issues d'une base de temps à quartz en mouvement mécanique pour entraîner les aiguilles ou autres organes d'affichage de l'heure. Le système est alimenté par une source d'énergie électrique, généralement une pile de petites dimensions qu'il faudra remplacer périodiquement.

Un moteur pas-à-pas classique pour mouvement horloger électronique est le moteur Lavet, qui est un moteur comprenant une bobine, un stator en un matériau magnétique doux et un rotor qui comporte un aimant permanent. Le rotor engrène avec un rouage de finissage pour entraîner les organes d'affichage de l'heure. Lorsqu'une impulsion électrique motrice est appliquée aux bornes de la bobine, le champ magnétique généré par la bobine est conduit par le stator et fait tourner le rotor d'un pas, généralement d'un demi-tour. Puisqu'il s'agit d'un moteur bipolaire, la polarité de l'impulsion motrice est inversée à chaque pas, de sorte que le rotor tourne normalement dans le même sens à chaque pas.

Une limitation d'un tel moteur monophasé est qu'il est fait pour tourner dans un sens préférentiel, en marche avant, avec une marche arrière possible mais très fortement dégradée au niveau performances et comportement d'aiguille. Généralement, le moteur monophasé entraîne ainsi le rouage de finissage, et donc les organes d'affichage de l'heure, dans un seul sens. Or il peut être désirable de faire tourner au moins momentanément les organes d'affichage de l'heure en sens inverse du sens habituel, par exemple pour régler l'affichage, pour afficher une deuxième information et/ou pour mettre les aiguilles dans une position de parking. Il est cependant désirable que le comportement dynamique en marche arrière des organes d'affichage, par exemple des aiguilles, soit similaire à leur comportement dynamique en marche avant, en particulier que leur mouvement soit fluide et régulier.

Une solution consiste à utiliser des moteurs biphasés, comportant deux bobines pouvant être excitées indépendamment l'une de l'autre, ce qui permet de générer des champs magnétiques de directions différentes dans la zone du rotor et ainsi amorcer et entretenir la rotation de ce dernier dans des sens différents de manière satisfaisante.

Le brevet FR2209251, par exemple, décrit un moteur comportant deux bobines qui sont excitées alternativement pour provoquer la rotation du rotor du moteur dans un sens ou dans l'autre, par pas de 180 degrés. Chaque bobine devant pouvoir à elle seule provoquer la rotation du rotor, chaque bobine doit être dimensionnée de manière à fournir l'énergie nécessaire à cette rotation, c'est-à-dire que chaque bobine doit avoir le même volume que celle d'un moteur pas à pas monophasé à un seul sens de rotation.

Les brevets CH625646, CH634696 et US4361790 décrivent un moteur pas-à-pas biphasé comprenant deux bobines, un stator et un rotor. Les deux bobines sont excitées simultanément pour faire tourner le rotor. En commutant judicieusement le sens des courants circulant dans les bobines, on peut faire tourner le champ magnétique dans la zone du rotor dans un sens ou dans l'autre, ce qui entraine le rotor dans un sens ou dans l'autre, mais toujours dans le même. Ainsi, le rotor tourne toujours dans le sens désiré, même s'il vient à manquer un pas ou à en faire un de trop. Les performances du moteur, et notamment le couple exercé sur le rotor, sont les mêmes quel que soit le sens de rotation du rotor, malgré que le moteur tourne dans un seul de ces sens la plupart de temps. Par ailleurs, afin que le rotor effectue un pas de 180°, il est nécessaire d'inverser le sens du courant dans une des deux bobines à chaque demi pas, ce qui rend le pilotage du moteur relativement complexe.

Un but de la présente invention est de proposer un dispositif de commande de moteur électrique pas-à-pas pour mouvement horloger électronique dont le moteur peut être piloté dans les deux sens de manière simple et efficace.

Un autre but de la présente invention est de proposer un dispositif de commande d'un moteur électrique pas-à-pas pour mouvement horloger électronique dont les performances du moteur sont optimisées, notamment en privilégiant les performances du moteur en marche avant tout en assurant un comportement dynamique optimal des organes d'affichage en marche arrière.

Encore un but de la présente invention est de proposer un moteur électrique pas-à-pas pour mouvement horloger électronique apte à être commandé par un tel dispositif de commande, ainsi qu'un ensemble comprenant un tel moteur et un tel dispositif de commande.

Ces buts et d'autres avantages sont atteints par un dispositif de commande pour un moteur électrique pas-à-pas pour mouvement horloger électronique, le moteur comprenant une première bobine, une deuxième bobine, un stator en un matériau magnétique doux et un rotor comprenant un aimant permanent, le dispositif de commande étant configuré pour générer un premier jeu d'impulsions motrices pour énergiser la première bobine et pour générer un deuxième jeu d'impulsions motrices pour énergiser la deuxième bobine, la première bobine et la deuxième bobine étant énergisées simultanément, dans un premier mode de fonctionnement le dispositif de commande générant le premier jeu d'impulsions motrices en contre-phase avec le deuxième jeu d'impulsions motrices pour tourner le rotor dans un premier sens et avec un premier couple, et dans un deuxième mode de fonctionnement le dispositif de commande générant le premier jeu d'impulsions motrices en phase avec le deuxième jeu d'impulsions motrices pour tourner le rotor dans un deuxième sens opposé au premier sens et avec un deuxième couple, le premier couple étant plus grand que le deuxième couple.

Le fonctionnement du moteur ainsi commandé est optimisé car le couple dans le premier sens de rotation du rotor, qui correspond de préférence au sens de marche avant du mouvement, est maximisé. Les dimensions du moteur, en particulier celles des bobines, et par conséquent sa consommation, peuvent ainsi être réduites par rapport aux dimensions et à la consommation d'un moteur de l'art antérieur pour un mouvement donné.

De préférence, l'amplitude du premier jeu d'impulsions motrices et l'amplitude du deuxième jeu d'impulsions motrices sont égales.

De préférence, le dispositif de commande régule le courant des premier et deuxième jeux d'impulsions motrices.

Les buts évoqués plus haut et d'autres avantages sont atteints également par un moteur électrique pas-à-pas pour mouvement horloger électronique, le moteur comprenant une première bobine, une deuxième bobine, un stator en un matériau magnétique doux et un rotor comprenant un aimant permanent, la première bobine générant un premier champ magnétique lorsqu'elle est énergisée par premier jeu d'impulsions motrices et la deuxième bobine générant un deuxième champ magnétique lorsqu'elle est énergisée par un deuxième jeu d'impulsions motrices, la première bobine et la deuxième bobine étant configurées et disposées de sorte qu'un champ magnétique résultant dans la zone du rotor est orienté selon une première direction lorsque le premier jeu d'impulsions motrices est en contre-phase avec le deuxième jeu d'impulsions motrices et selon une deuxième direction différente de la première direction lorsque le premier jeu d'impulsions motrices est en phase avec le deuxième jeu d'impulsions motrices, le rotor comprenant au moins une position de repos dans laquelle l'aimant permanent est orienté selon une direction bissectrice de la première direction et de la deuxième direction.

L'aimant étant orienté, lorsque le rotor est en position de repos, selon une bissectrice des deux directions que peut prendre le champ magnétique résultant dans la zone du rotor, ce dernier peut être entraîné de manière similaire dans un sens ou dans l'autre par un choix judicieux des phases des impulsions motrices et son comportement dynamique sera sensiblement identique dans les deux sens de rotation.

La deuxième direction est de préférence perpendiculaire à la première direction.

Le stator comprend par exemple trois isthmes régulièrement répartis autour du rotor qui forment trois épanouissements polaires.

Par exemple, la première bobine est disposée entre un premier épanouissement polaire et un deuxième épanouissement polaire des trois épanouissements polaires et la deuxième bobine est disposée entre le premier épanouissement polaire et un troisième épanouissement polaire des trois épanouissements polaires.

De préférence, le moteur comprend un support en un matériau magnétique doux sur lequel la première bobine et la deuxième bobine sont bobinées.

Le support est de préférence en contact magnétique avec le premier épanouissement polaire entre la première bobine et la deuxième bobine, en contact magnétique avec le deuxième épanouissement polaire à l'extrémité opposée de la première bobine et en contact magnétique avec le troisième épanouissement polaire à l'extrémité opposée de la deuxième bobine.

Les buts évoqués plus haut et d'autres avantages sont atteints également par un ensemble comprenant un tel dispositif de commande et un tel moteur.

Les buts évoqués plus haut et d'autres avantages sont atteints également par un procédé de commande d'un tel moteur, comprenant l'envoi simultané d'un premier jeu d'impulsions motrices pour énergiser la première bobine et d'un deuxième jeu d'impulsions motrices pour énergiser la deuxième bobine, dans un premier mode de fonctionnement le premier jeu d'impulsions motrices étant en contre-phase avec le deuxième jeu d'impulsions motrices pour tourner le rotor dans un premier sens et avec un premier couple, dans un deuxième mode de fonctionnement le premier jeu d'impulsions motrices étant en phase avec le deuxième jeu d'impulsions motrices pour tourner le rotor dans un deuxième sens opposé au premier sens et avec un deuxième couple, le premier couple étant plus grand que le deuxième couple.

Le procédé de commande de l'invention permet ainsi un pilotage simple et efficace et dans les deux sens de marche du moteur de l'invention.

De préférence, le sens du premier champ magnétique dans le premier épanouissement polaire est opposé au sens du deuxième champ magnétique dans le premier épanouissement polaire lorsque le moteur est commandé selon le premier mode de fonctionnement, et le sens du premier champ magnétique dans le premier épanouissement polaire est identique au sens du deuxième champ magnétique dans le premier épanouissement polaire lorsque le moteur est commandé selon le deuxième mode de fonctionnement.

De préférence, le passage du premier mode au deuxième mode étant effectué par l'inversion de la phase du premier jeu d'impulsions motrices.

L'amplitude et la durée des impulsions motrices du premier jeu d'impulsions motrices sont de préférence égales à l'amplitude et à la durée des impulsions motrices du deuxième jeu d'impulsions motrices.

L'invention sera mieux comprise à la lecture de la description ci-dessous, illustrée par les figures où :
- les figures 1 à 4 illustrent un moteur pas-à-pas selon une forme d'exécution de l'invention vu de dessous, dans différentes situations de pilotage ;
- la figure 5 est une vue de dessous du stator et des noyaux des bobines du moteur des figures 1 à 4 ;
- la figure 6 représente le flux magnétique mutuel en valeurs normalisées entre chacune des bobines du moteur des figures 1 à 4 et l'aimant permanent du rotor en fonction de la position angulaire du rotor ;
- la figure 7 représente le coefficient de couplage entre les bobines du moteur de l'invention et l'aimant permanent du rotor en fonction de la position angulaire du rotor ;
- la figure 8 représente la somme et la différence des coefficients de couplage de la figure 7, ainsi que le couple de positionnement en valeurs normalisées du rotor en fonction de sa position angulaire.

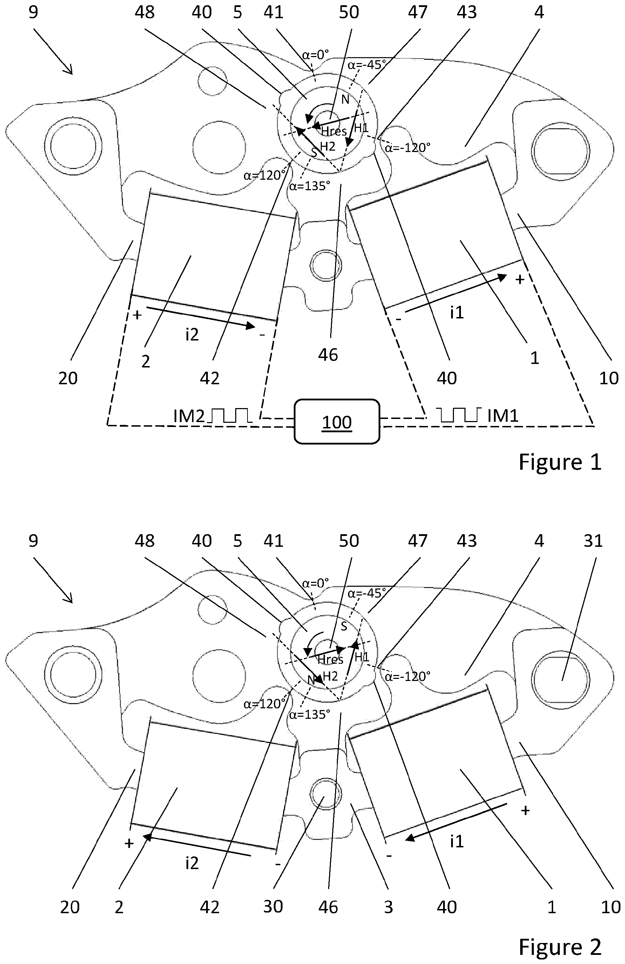

En référence aux figures 1 à 4, un dispositif de commande 100 et un moteur 9 selon une forme d'exécution de l'invention sont illustrés. Pour des questions de lisibilité le dispositif de commande 100 est représenté uniquement sur la figure 1 afin de ne pas surcharger les autres figures. Le moteur 9 est un moteur électrique pas-à-pas biphasé comprenant deux bobines 1, 2, un stator 4 en un matériau magnétique doux et un rotor 5 monté mobile en rotation sur un axe 50. Le rotor 5 comporte un aimant permanent dont les pôles nord et sud sont désignés respectivement par N et S sur les figures. Le stator 4 comprend trois isthmes 41, 42, 43, ou parties amincies, formant entre eux trois épanouissements polaires 46, 47, 48. Les isthmes 41, 42, 43 sont de préférence régulièrement répartis autour du rotor 5 et définissent respectivement en leur milieu par exemple les positions angulaires α = 0°, α = 120° et α = -120° autour de l'axe 50 du rotor 5. Les trois épanouissements polaires 46, 47, 48 sont ainsi de préférence disposés sensiblement à 120° les uns des autres par rapport au centre de l'axe 50. Selon le mode d'exécution illustré, les trois épanouissements polaires 46, 47, 48 s'étendent chacun autour du rotor 5 sur un angle légèrement inférieur à 120°. Il est toutefois envisageable dans le cadre de l'invention de configurer les épanouissements polaires de sorte qu'ils s'étendent sur d'autres angles, en particulier sur des angles plus petits, selon les caractéristiques recherchées pour le moteur, ses dimensions, et/ou les matériaux choisis. Les angles sur lesquels s'étendent les trois épanouissements polaires autour du rotor sont cependant de préférence sensiblement égaux entre eux.

D'autres configurations sont également possibles pour le moteur électrique pas-à-pas. Par exemple, le rotor peut avoir plus de deux pôles et le stator plus de trois épanouissements polaires, par exemple quatre pôles et six épanouissements polaires. Le moteur peut également comprendre plus de deux bobines.

De manière connue, le dispositif de commande 100 peut comprendre un circuit et un contrôleur pour générer un premier jeu d'impulsions motrices IM1 qui énergise la première bobine 1 et un deuxième jeu d'impulsions motrices IM2 qui énergise la deuxième bobine 2. Selon l'invention, la première bobine et la deuxième bobine sont énergisées simultanément, voire en même temps, et pas en alternance. L'amplitude du premier jeu d'impulsions motrices IM1 et l'amplitude du deuxième jeu d'impulsions motrices IM2 sont de préférence égales. Le dispositif de commande 100 peut réguler les impulsions motrices IM1, IM2 par tension, mais de préférence et dans la description qui suit le dispositif de commande 100 régule le courant des impulsions motrices IM1, IM2.

Selon la forme d'exécution illustrée, les bobines 1, 2 sont configurées et disposées de sorte que le champ magnétique H1, H2 généré par chaque bobine 1, 2 lorsqu'elle est parcourue par un courant électrique i1, i2 traverse la zone du rotor 5 essentiellement entre deux des trois épanouissements polaires 46, 47, 48. Par exemple, l'essentiel d'un premier champ magnétique H1 généré par la première bobine 1 lorsqu'elle est traversée par un premier courant i1 traverse la zone du rotor 5 entre un premier épanouissement polaire 46 et un deuxième épanouissement polaire 47, et l'essentiel d'un deuxième champ magnétique H2 généré par la deuxième bobine 2 lorsqu'elle est traversée par un deuxième courant i2 traverse la zone du rotor 5 entre le premier épanouissement polaire 46, qui est commun aux deux bobines 1, 2, et un troisième épanouissement polaire 48. Une partie du champ magnétique H1, H2 généré par chacune des bobines 1, 2 passe également par l'autre bobine 2, 1, et ainsi par le dernier épanouissement polaire 48 ou 47 des trois épanouissements polaires 46, 47, 48.

Selon la forme d'exécution illustrée, des alvéoles 40 formées dans le stator 4 autour de la périphérie du rotor 5 imposent au rotor 5 deux positions de repos stables par rapport au stator 4, dans lesquelles le rotor 5 est maintenu sous l'effet du champ magnétique de son aimant permanent lorsque les bobines 1, 2 ne sont pas excitées électriquement, c'est-à-dire lorsque les courants i1, i2 sont effectivement nuls. D'autres configurations du stator 4 sont toutefois envisageables dans le cadre de l'invention pour définir les positions de repos.

Dans cette forme d'exécution, les deux positions de repos sont séparées entre elles d'un demi-tour du rotor 5, qui correspond à un pas du moteur 9. De préférence, lorsque le rotor 5 est dans une des deux positions de repos, une ligne diamètre du rotor 5 passant par ses pôles sud S et nord N forme un angle de 45° avec un axe virtuel non représenté passant par le centre de l'axe 50 et à égale distance des deuxième et troisième épanouissements polaires 47, 48, c'est-à-dire avec un axe virtuel passant par les positions α = 0° et α = 180°. Lorsque le rotor 5 est dans une première position de repos, le pôle nord N de l'aimant permanent est ainsi sensiblement en position α = 135°, tel qu'illustré par exemple à la figure 1, et quand le rotor 5 est dans la deuxième position de repos, le pôle nord N de son aimant permanent est sensiblement en position angulaire α = -45°, tel qu'illustré par exemple à la figure 2.

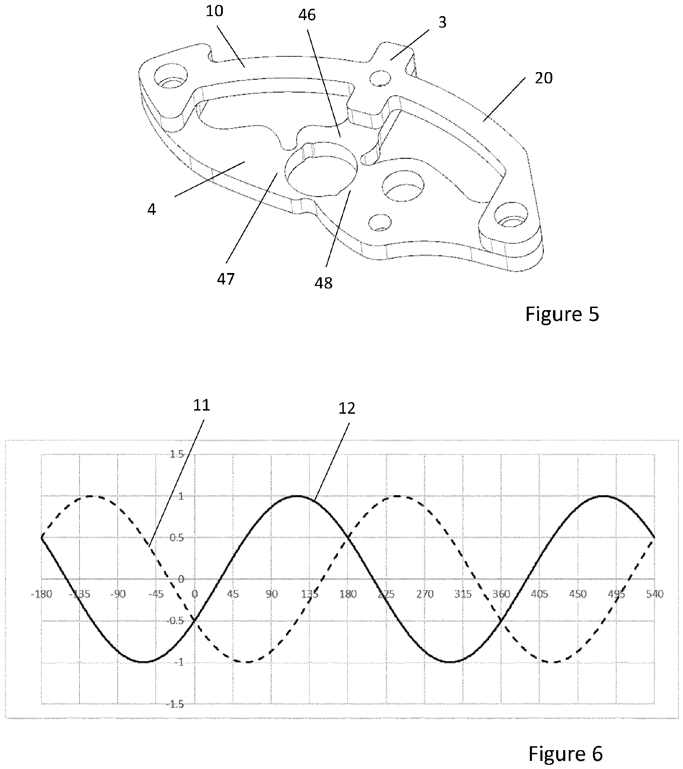

Comme illustrée de manière plus visible à la figure 5, les deux bobines comportent de préférence chacune un noyau 10, 20 en un matériau magnétique doux, de préférence le même matériau que le matériau du stator 4, pour conduire et concentrer le champ magnétique généré par la bobine respective lorsqu'elle est traversée par un courant électrique. Le noyau 10 de la première bobine est ainsi en contact avec le premier épanouissement polaire 46 sur une de ses extrémités, et avec le deuxième épanouissement polaire 47 sur l'extrémité opposée, tandis que le noyau 20 de la deuxième bobine est en contact avec le premier épanouissement polaire 46 sur une de ses extrémités et avec le troisième épanouissement polaire 48 sur l'extrémité opposée. Selon la forme d'exécution illustrée, les deux bobines sont bobinées sur un même support 3 qui forme les deux noyaux 10, 20 d'une seule pièce. Ce mode de réalisation permet de simplifier la production des bobines et permet de minimiser les dimensions du moteur pour une dimension de bobines donnée. Ce mode de réalisation permet par ailleurs de minimiser l'épaisseur de l'ensemble par la fixation d'un seul support 3 à un bras central du stator 4. Afin d'assurer la résistance mécanique, le contact magnétique et la continuité entre le stator 4 et le support 3, ces derniers sont par exemples fixés l'un à l'autre à l'aide de rivets 30, de tiges associées à des circlips et/ou d'un mécanisme de verrouillage à quart de tour 31, illustrés par exemple sur la figure 2. Le stator 4 et le support 3 sont de préférence fixés l'un à l'autre à chaque extrémité des deux noyaux 10, 20.

Le premier champ magnétique H1 généré par la première bobine 1 traversant la zone du rotor 5 essentiellement entre le premier épanouissement polaire 46 et le deuxième épanouissement polaire 47, et le deuxième champ magnétique H2 généré par la deuxième bobine 2 traversant la zone du rotor 5 essentiellement entre le premier épanouissement polaire 46 et le troisième épanouissement polaire 48, les premier et deuxième champs magnétiques H1, H2 traversent la zone du rotor 5 selon des directions générales telles que représentées schématiquement sur les figures, essentiellement symétriques par rapport à l'axe virtuel passant par le centre de l'axe 50 et à égale distance des deuxième et troisième épanouissements polaires 47, 48, c'est-à-dire par rapport à l'axe virtuel passant par les positions α = 0° et α = 180°. En commutant judicieusement le sens des courants i1, i2 à travers les bobines 1, 2, il est possible d'orienter le champ magnétique résultant Hres dans la zone du rotor 5 selon différentes directions. De préférence, les premier et deuxième courants i1, i2 parcourant les première et deuxième bobines 1, 2 sont de même intensité et simultanés et les première et deuxième bobines 1, 2 ont les mêmes caractéristiques électromagnétiques. Le champ magnétique résultant Hres peut ainsi prendre deux directions sensiblement perpendiculaires entre elles, selon que les sens des premier et deuxième champs magnétiques H1, H2 sont identiques ou opposés au sortir du premier épanouissement polaire 46, comme illustré sur les figures 1 à 4.

Pour la suite de la description, les premier et deuxième courants i1 et i2 ont un sens qui sera appelé le sens positif lorsque, à l'intérieur de la première bobine 1, le champ magnétique généré sous l'effet du premier courant i1 est dirigé de la zone du deuxième épanouissement polaire 47 vers la zone du premier épanouissement polaire 46 et que, à l'intérieur de la deuxième bobine 2, le champ magnétique généré sous l'effet du deuxième courant i2 est dirigé de la zone du troisième épanouissement polaire 48 vers la zone du premier épanouissement polaire 46. Ces courants i1, i2 créent à l'extérieur des bobines 1, 2 des champs H1 et H2 traversant la zone du rotor 5 respectivement du premier épanouissement polaire 46 vers le deuxième épanouissement polaire 47 et du premier épanouissement polaire 46 vers le troisième épanouissement polaire 48. Le sens de ces champs magnétiques H1, H2 sera également appelé par la suite positif. Les courants i1, 12 et champs magnétiques H1, H2 de sens opposé au sens positif seront dits de sens négatif.

Lorsque les premier et deuxième courants i1, i2 sont de sens opposés entre eux, tel qu'illustré dans les figures 1 et 2, le champ magnétique résultant Hres traverse la zone du rotor 5, en première approximation tout au moins, selon une direction sensiblement perpendiculaire à l'axe virtuel passant par le centre de l'axe 50 et à égale distance des deuxième et troisième épanouissements polaires 47, 48, c'est-à-dire perpendiculaire à l'axe virtuel passant par les positions α = 0° et α = 180°. Par un choix approprié du sens des premier et deuxième courants i1, i2 lors de la prochaine impulsion de courant, le rotor 5 peut alors être mu hors de sa position de repos pour effectuer un pas de 180° dans un premier sens de rotation, illustré sur les figures 1 et 2 par la flèche en arc de cercle indiquant le sens antihoraire (les figures 1 et 2 étant des vues de dessous du moteur 9, dans cette situation le rotor 5 tourne en sens horaire lorsque le moteur 9 est vu de dessus).

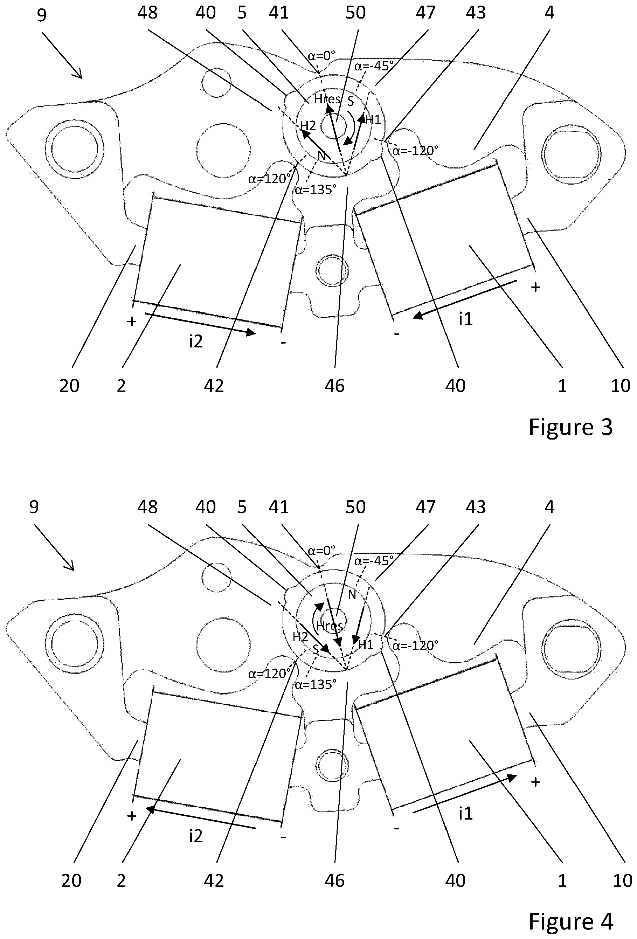

Lorsque les premier et deuxième courants i1, i2 sont de même sens, tel qu'illustré dans les figures 3 et 4, le champ magnétique résultant Hres traverse la zone du rotor 5, en première approximation tout au moins, selon une direction sensiblement parallèle à l'axe virtuel passant par le centre de l'axe 50 et à égale distance des deuxième et troisième épanouissements polaires 47, 48, c'est-à-dire parallèle à l'axe virtuel passant par les positions α = 0° et α = 180°. Par un choix approprié du sens des premier et deuxième courants i1, i2 lors de la prochaine impulsion de courant, le rotor 5 peut alors être mu hors de sa position de repos pour effectuer un pas de 180° dans un deuxième sens de rotation, illustré sur les figures 3 et 4 par la flèche en arc de cercle indiquant le sens horaire (les figures 3 et 4 étant également des vues de dessous du moteur 9, dans cette situation le rotor 5 tourne en sens antihoraire lorsque le moteur 9 est vu de dessus).

Lorsque le rotor 5 est en position de repos, l'aimant permanent est orienté selon une direction sensiblement bissectrice de l'angle formé par les deux directions que peut prendre le champ magnétique résultant Hres lorsque les deux bobines 1, 2 sont énergisées simultanément par des impulsions de courant de même intensité. Le rotor 5 peut ainsi être entraîné de manière sensiblement identique dans un premier sens de rotation et dans un deuxième sens de rotation opposé au premier en fonction de la direction du champ magnétique résultant Hres. Le comportement de l'indicateur, par exemple la ou les aiguilles, ainsi entraîné sera sensiblement le même dans les deux sens.

La figure 6 représente le flux magnétique mutuel entre chacune des première et deuxième bobines 1, 2 et l'aimant permanent du rotor 5 en fonction de la position angulaire du rotor 5, en particulier du pôle nord N de l'aimant permanent. La courbe 11 représente le flux magnétique mutuel entre l'aimant permanent et la première bobine 1, tandis que la courbe 12 représente le flux magnétique mutuel entre l'aimant permanent et la deuxième bobine 2. Dans la figure 6, les courbes 11, 12 indiquent des valeurs normalisées sur la valeur maximum du flux magnétique mutuel entre l'aimant permanent et la bobine 1, 2 respective. Le flux magnétique mutuel entre l'aimant permanent et la première bobine 1 est maximum pour un angle de α = 120°, correspondant à la position de l'isthme 43 entre le premier épanouissement polaire 46 et le deuxième épanouissement polaire 47. Le flux mutuel entre l'aimant permanent et la deuxième bobine 2 est maximum pour un angle de α = -120°, correspondant à la position de l'isthme 42 entre le premier épanouissement polaire 46 et le troisième épanouissement polaire 48. La répartition des isthmes 41, 42, 43 autour du rotor 5 selon le mode d'exécution illustré entraîne ainsi un déphasage de 120° entre le flux magnétique mutuel entre l'aimant permanent et la première bobine 1 et le flux magnétique mutuel entre l'aimant permanent et la deuxième bobine 2.

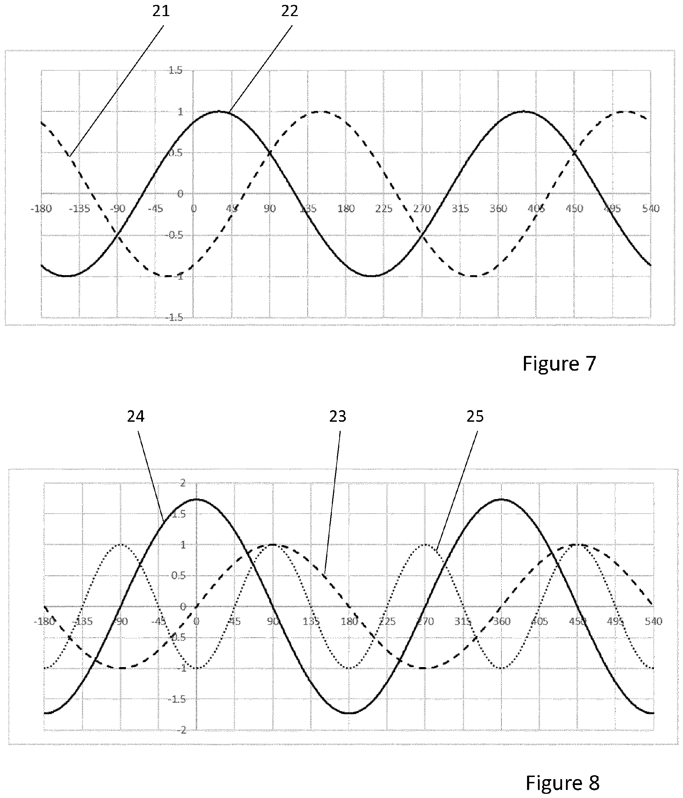

La figure 7 représente le coefficient de couplage entre les première et deuxième bobines 1, 2 et l'aimant permanent du rotor 5 en fonction de la position angulaire du rotor 5, en particulier de la position angulaire de son pôle nord N. Le coefficient de couplage est représentatif de l'efficacité du transfert d'énergie entre la bobine 1,2 respective et l'aimant permanent. Plus la valeur absolue du coefficient de couplage est grande, plus le couple exercé sur le rotor 5 par le champ magnétique H1, H2 généré par un courant i1, i2 donné traversant la bobine 1, 2 respective sera importante. La courbe 21 représente le coefficient de couplage entre l'aimant permanent et la première bobine 1, tandis que la courbe 22 représente le coefficient de couplage entre l'aimant permanent et la deuxième bobine 2.

En référence à la figure 8, lorsque les premier et deuxième courants i1, i2 sont de même sens, positif ou négatif, les flux s'additionnent, de même que les coefficients de couplage. La courbe 23 représente le coefficient de couplage résultant lorsque les deux bobines 1, 2 sont alimentées avec des courants i1, i2 de même sens, en fonction de la position angulaire du rotor 5, en particulier de la position angulaire de son pôle nord N. La courbe 23 résulte de l'addition des coefficients de couplage dus aux première et deuxième bobines 1, 2 représentés respectivement par les courbes 21 et 22. Lorsque les premier et deuxième courants i1, i2 sont de sens opposés, les flux se soustraient l'un à l'autre, de même que les coefficients de couplage. La courbe 24 représente le coefficient de couplage résultant lorsque les deux bobines 1, 2 sont alimentées avec des courants i1, i2 de sens opposés, en fonction de la position angulaire du rotor 5, en particulier de la position angulaire de son pôle nord N. La courbe 24 résulte de la soustraction des coefficients de couplage dus aux première et deuxième bobines 1, 2 représentés respectivement par les courbes 21 et 22.

La courbe 25 représente le couple de positionnement du rotor 5 en fonction de la position angulaire du rotor 5, en particulier de la position angulaire de son pôle nord N. Les valeurs nulles du couple de positionnement du rotor 5 correspondent à des positions d'équilibre du rotor 5, modulo 360°. Cependant, les positions α = - 135° et α = 45° sont instables, alors que les positions α = -45° et α = 135° sont stables et correspondent aux positions de repos du rotor 5.

Selon l'invention, dans un premier sens de rotation du rotor, typiquement le sens de marche avant correspondant de préférence à la marche normale des organes d'affichage de l'heure d'une pièce d'horlogerie comprenant le moteur 9, le moteur 9 est de préférence piloté avec des impulsions de courants i1, i2 simultanées et de sens opposés, de sorte que le coefficient de couplage résultant, illustré par la courbe 24, est plus important. Le rendement du moteur 9 en marche avant est ainsi maximisé. Dans un deuxième sens de rotation du rotor, typiquement le sens de marche arrière qui est par exemple utilisé temporairement pour ajuster l'heure de la pièce d'horlogerie, afficher une deuxième grandeur, par exemple un deuxième fuseau horaire, ou positionner les aiguilles dans une position de parking, le moteur 9 est alors piloté avec des impulsions de courants i1, i2 simultanées et de même sens. Le rendement du moteur est moindre, mais suffisant pour permettre ce déplacement de durée de préférence limitée.

Le procédé de pilotage du moteur 9 selon l'invention exécuté par le dispositif de commande 100 comprend ainsi l'entraînement du moteur 9 dans un premier sens, de préférence le sens de marche avant, dans lequel les impulsions de courant i1, i2 traversant les bobines 1, 2 sont de sens opposés, i.e. en contre-phase, et le coefficient de couplage résultant est maximisé, et l'entraînement du moteur 9 dans un deuxième sens opposé au premier sens, par exemple le sens de marche arrière, dans lequel les impulsions de courant i1, i2 traversant les bobines 1, 2 sont de même sens et le coefficient de couplage résultant est plus faible.

Plus généralement selon l'invention, dans un premier mode de fonctionnement du moteur le premier jeu d'impulsions motrices IM1 est en contre-phase avec le deuxième jeu d'impulsions motrices IM2 pour tourner le rotor dans un premier sens avec un premier couple, et dans un deuxième mode de fonctionnement du moteur le premier jeu d'impulsions motrices IM1 est en phase avec le deuxième jeu d'impulsions motrices IM2 pour tourner le rotor dans un deuxième sens avec un deuxième couple, le premier couple étant plus important que le deuxième couple. Puisque le moteur opère le plus souvent dans le premier mode de fonctionnement, les performances énergétiques globales du moteur sont améliorées et peuvent être optimisées.

De préférence, le passage d'un sens de rotation du rotor 5 à l'autre est effectué de manière ordonnée afin d'éviter un pas raté. Le tableau 1 montre un exemple de pilotage du moteur 9 selon l'invention avec des impulsions de courant IM1, IM2 adaptées pour atteindre le sens de rotation choisi. Dans cet exemple, la position initiale est la position 1, soit la position de repos du rotor 5 dans laquelle la position angulaire du pôle nord N de l'aimant permanent est α = -45°, telle qu'illustrée à la figure 1, et la séquence ci-dessous montre, à titre d'exemple, comment piloter le moteur dans un sens et dans l'autre à partir de cette position. Les positions de repos du rotor indiquées dans le tableau correspondent aux positions angulaires suivantes du pôle nord N de l'aimant permanent : position 1, α = 135° ; position 2, α = -45° ; position 3, α = 135° ; position 4, α = -45°.

**Tableau 1 : exemple de pilotage du moteur selon l'invention**

| Sens du courant i1 | Sens du courant i2 | Sens de marche | Position de départ | Position d'arrivée |
|---|---|---|---|---|
| - | + | Avant | 1 | 2 |
| + | - | Avant | 2 | 3 |
| - | + | Avant | 3 | 4 |
| + | + | Arrière | 4 | 3 |
| - | - | Arrière | 3 | 2 |
| + | - | Avant | 2 | 3 |
| - | - | Arrière | 3 | 2 |
| + | - | Avant | 2 | 3 |

Pour éviter une perte de pas, à chaque passage du sens de marche avant au sens de marche arrière ou vice versa, le sens du premier courant i1 à travers la première bobine 1 est de préférence inversé. Ainsi, pour changer de sens de marche sans perte de pas, le sens du premier courant i1 à travers la première bobine 1 pour le prochain pas est inversé par rapport au sens du premier courant i1 lors du pas précédent, tandis que le sens du deuxième courant i2 à travers la deuxième bobine 2 est le même que le sens du deuxième courant i2 lors du pas précédent. Selon l'invention, lorsque le moteur 9 est entraîné dans un sens de rotation ou dans l'autre, le sens des premier et deuxième courant i1, i2 est inversé à chaque pas. Lorsque le sens de rotation du moteur 9 doit être inversé au prochain pas, le sens du premier courant i1 à travers la première bobine 1 est inversé par rapport au pas précédent tandis que le sens du deuxième courant i2 à travers la deuxième bobine reste identique à celui du pas précédent.

## Revendications

1. Dispositif de commande (100) pour un moteur électrique pas-à-pas (9) pour mouvement horloger électronique, le moteur (9) comprenant une première bobine (1), une deuxième bobine (2), un stator (4) en un matériau magnétique doux et un rotor (5) comprenant un aimant permanent, le dispositif de commande (100) étant configuré pour générer un premier jeu d'impulsions motrices (IM1) pour énergiser la première bobine (1) et pour générer un deuxième jeu d'impulsions motrices (IM2) pour énergiser la deuxième bobine (2), la première bobine (1) et la deuxième bobine (2) étant énergisées simultanément, **caractérisé en ce que** dans un premier mode de fonctionnement le dispositif de commande (1) génère le premier jeu d'impulsions motrices (IM1) en contre-phase avec le deuxième jeu d'impulsions motrices (IM2) pour tourner le rotor (5) dans un premier sens et avec un premier couple, et **en ce que** dans un deuxième mode de fonctionnement le dispositif de commande (1) génère le premier jeu d'impulsions motrices (IM1) en phase avec le deuxième jeu d'impulsions motrices (IM2) pour tourner le rotor (5) dans un deuxième sens opposé au premier sens et avec un deuxième couple, le premier couple étant plus grand que le deuxième couple.

2. Dispositif (100) selon la revendication précédente, l'amplitude du premier jeu d'impulsions motrices (IM1) et l'amplitude du deuxième jeu d'impulsions motrices (IM2) étant égales.

3. Dispositif (100) selon l'une des revendications précédentes, le dispositif de commande (100) régulant le courant du premier jeu d'impulsions motrices (IM1) et le courant du deuxième jeu d'impulsions motrices (IM2).

4. Moteur électrique pas-à-pas (9) pour mouvement horloger électronique, le moteur (9) comprenant une première bobine (1), une deuxième bobine (2), un stator (4) en un matériau magnétique doux et un rotor (5) comprenant un aimant permanent, la première bobine (1) générant un premier champ magnétique (H1) lorsqu'elle est énergisée par un premier jeu d'impulsions motrices (IM1) et la deuxième bobine (2) générant un deuxième champ magnétique (H2) lorsqu'elle est énergisée par un deuxième jeu d'impulsions motrices (IM2), la première bobine (1) et la deuxième bobine (2) étant configurées et disposées de sorte qu'un champ magnétique résultant (Hres) dans la zone du rotor (5) est orienté selon une première direction lorsque le premier jeu d'impulsions motrices (IM1) est en contre-phase avec le deuxième jeu d'impulsions motrices (IM2) et selon une deuxième direction différente de la première direction lorsque le premier jeu d'impulsions motrices (IM1) est en phase avec le deuxième jeu d'impulsions motrices (IM2), **caractérisé en ce que** le rotor (5) comprend au moins une position de repos dans laquelle l'aimant permanent est orienté selon une direction bissectrice de la première direction et de la deuxième direction.

5. Moteur (9) selon la revendication précédente, la deuxième direction étant perpendiculaire à la première direction.

6. Moteur (9) selon l'une des revendications 4 et 5, le stator (4) comprenant trois isthmes (41, 42, 43) régulièrement répartis autour du rotor (5) et formant trois épanouissements polaires (46, 47, 48).

7. Moteur (9) selon la revendication précédente, la première bobine (1) étant disposée entre un premier épanouissement polaire (46) et un deuxième épanouissement polaire (47) des trois épanouissements polaires (46, 47, 48) et la deuxième bobine (2) étant disposée entre le premier épanouissement polaire (46) et un troisième épanouissement polaire (47) des trois épanouissements polaires (46, 47, 48).

8. Moteur (9) selon la revendication précédente, comprenant un support (3) en un matériau magnétique doux sur lequel la première bobine (1) et la deuxième bobine (2) sont bobinées.

9. Moteur (9) selon l'une des revendications 7 ou 8, le support (3) étant en contact magnétique avec le premier épanouissement polaire (46) entre la première bobine (1) et la deuxième bobine (2), en contact magnétique avec le deuxième épanouissement polaire (47) à l'extrémité opposée de la première bobine (1) et en contact magnétique avec le troisième épanouissement polaire (47) à l'extrémité opposée de la deuxième bobine (2).

10. Ensemble comprenant un dispositif de commande (100) selon l'une des revendications 1 à 3 et un moteur (9) selon l'une des revendications 4 à 9.

11. Procédé de commande d'un moteur (9) selon l'une des revendications 4 à 9, comprenant l'envoi simultané d'un premier jeu d'impulsions motrices (IM1) pour énergiser la première bobine (1) et d'un deuxième jeu d'impulsions motrices (IM2) pour énergiser la deuxième bobine (2), **caractérisé en ce que** dans un premier mode de fonctionnement le premier jeu d'impulsions motrices (IM1) est en contre-phase avec le deuxième jeu d'impulsions motrices (IM2) pour tourner le rotor (5) dans un premier sens et avec un premier couple, et **en ce que** dans un deuxième mode de fonctionnement le premier jeu d'impulsions motrices (IM1) est en phase avec le deuxième jeu d'impulsions motrices (IM2) pour tourner le rotor (5) dans un deuxième sens opposé au premier sens et avec un deuxième couple, le premier couple étant plus grand que le deuxième couple.

12. Procédé de pilotage selon la revendication précédente, le sens du premier champ magnétique (H1) dans le premier épanouissement polaire (46) étant opposé au sens du deuxième champ magnétique (H2) dans le premier épanouissement polaire (46) lorsque le moteur est commandé selon le premier mode de fonctionnement, et le sens du premier champ magnétique (H1) dans le premier épanouissement polaire (46) étant identique au sens du deuxième champ magnétique (H2) dans le premier épanouissement polaire (46) lorsque le moteur est commandé selon le deuxième mode de fonctionnement.

13. Procédé de pilotage selon l'une des revendications 11 et 12, le passage du premier mode au deuxième mode étant effectué par l'inversion de la phase du premier jeu d'impulsions motrices (IM1).

14. Procédé de pilotage selon l'une des revendications 11 à 13, l'amplitude et la durée des impulsions motrices (IM1) du premier jeu d'impulsions motrices (IM1) étant égales à l'amplitude et à la durée des impulsions motrices (IM2) du deuxième jeu d'impulsions motrices.
